**Europäisches Patentamt**

**European Patent Office**

**Office européen des brevets**

(11) Veröffentlichungsnummer: **0 262 425**
**B1**

(12) **EUROPÄISCHE PATENTSCHRIFT**

(45) Veröffentlichungstag der Patentschrift:
20.06.90

(21) Anmeldenummer: 87112704.9

(22) Anmeldetag: 01.09.87

(51) Int. Cl.⁵: **B62D 51/00, F16F 3/08**

(54) Handgeführte selbstfahrende Maschine für die Bearbeitung des Bodens oder seiner Oberfläche.

(30) Priorität: **02.09.86 DE 3629811**

(43) Veröffentlichungstag der Anmeldung:
06.04.88 Patentblatt 88/14

(45) Bekanntmachung des Hinweises auf die Patenterteilung:
20.06.90 Patentblatt 90/25

(84) Benannte Vertragsstaaten:
CH DE FR IT LI

(56) Entgegenhaltungen:
BE-A- 414 757
FR-A- 1 254 347
US-A- 4 556 203

(73) Patentinhaber: **Hako-Werke GMBH & Co., Hamburger Strasse 209-239, D-2060 Bad Oldesloe 1(DE)**

(72) Erfinder: **Eye von, Peter, Danziger Str. 7b, D 2060 Bad Oldesloe(DE)**
Erfinder: **Neuhoff, Manfred, Dipl. Ing., Roegen, D-2060 Bad Oldesloe(DE)**

(74) Vertreter: **Wilcken, Thomas, Dipl.-Ing., Musterbahn 1, D-2400 Lübeck(DE)**

## Beschreibung

Die Erfindung betrifft eine handgeführte selbstfahrende Maschine für die Bearbeitung des Bodens oder seiner Oberfläche, bei der eine von einer Bedienungsperson zu handhabende Holmanordnung zur Führung der Maschine über eine mit wenigstens einem Dämpfungsmittel zusammenwirkende Verbindung an einem Maschinenrahmen befestigt ist, der einen Antriebsmotor und wenigstens ein von dem Motor angetriebenes, den Bodenbereich bearbeitendes Werkzeug trägt, wobei die Verbindung eine gedämpfte und begrenzte Drehbewegung der Holmanordnung um die Längsachse der Maschine gestattet.

In der DE-A 35 03 938 ist eine derartige Maschine offenbart, bei der die Holmanordnung mit der übrigen Maschine durch eine Verbindungskonstruktion mit mehreren Dämpfungselementen in Form von zylindrischen, elastischen Gummilagern verbunden ist, wobei die allseitig wirkenden Gummilager funktionell ein Zwischenglied zwischen der Holmanordnung und der übrigen Maschine bilden, so daß der von einer Bedienungsperson auf die Holmanordnung ausgeübte Kraftfluß, z.B. zwecks Änderung der Arbeitsrichtung der Maschine, zwangsläufig über die Gummilager verlaufen muß. Daraus folgt in Verbindung mit der Dämpfungseigenschaft der Gummilager, daß die Maschine bei laufendem Motor und angetriebenem Arbeitsgerät nicht sicher geführt werden kann, insbesondere hinsichtlich ihrer Seitenführungsstabilität. Die Holmanordnung ist somit innerhalb der Dämpfungsamplituden der Gummilager schwammig gelagert, so daß durch die übrige Maschine nicht sofort auf Richtungsänderungen der Holmanordnung gemäß dem Willen der Bedienungsperson reagieren kann. Dies ist erst dann der Fall, wenn der Achskörper der Holmanordnung aufgrund der maximalen Dämpfungsamplitude an einer Buchse anschlägt, die somit nur Anschlagfunktion ausübt.

Die Aufgabe der Erfindung besteht in der Verbesserung einer Maschine der einleitend angeführten Art dahingehend, daß einerseits die gute Führungsfähigkeit der Maschine sowohl in deren Fahrrichtung als auch bei deren Neigungsund horizontalen Querbewegungen voll erhalten bleibt, daß aber andererseits die Vertikalkomponenten der durch den Motor und das von ihm angetriebene Werkzeug hervorgerufenen Vibrationen nur gedämpft auf die von der Bedienungsperson zu handhabende Holmanordnung gelangen.

In bevorzugter Ausgestaltung der erfindungsgemäßen Maschine besteht die erwähnte Verbindung aus einer scharnierartigen Gelenkverbindung und das Dämpfungsmittel ist mit horizontalem radialem Abstand von der scharnierartigen Gelenkverbindung zwischen der Holmanordnung und dem Maschinenrahmen wirkend vorgesehen.

In bevorzugter Ausgestaltung der erfindungsgemäßen Ma schine besteht die scharnierartige Gelenkverbindung aus einer mittleren Hülse, die mit dem Traversenteil der Holmanordnung verschweißt ist, aus zwei äußeren, sich beidendig an die Hülse axial anschließenden Hülsen, die mit dem Maschinenrahmen verschweißt sind, und aus einem gemeinsamen, sich durch alle Hülsen erstreckenden Gelenkbolzen.

Durch diese Lösung bleibt die Führungsfähigkeit der Maschine in jeder Richtung, insbesondere in horizontaler seitlicher Richtung, und in jedem Augenblick voll erhalten, da die scharnierartige Gelenkverbindung, abgesehen von ihrer Beweglichkeit um die eigene Achse, als starre Verbindung anzusehen ist. Die Steuerungsbewegungen der Bedienungsperson werden somit ohne Verzögerung oder Abweichung genau auf die übrige Maschine übertragen, weil der Kraftfluß allein über diese scharnierartige Gelenkverbindung verläuft. Gleichzeitig erfolgt aber eine sehr beträchtliche Dämpfung der vom Arbeitswerkzeug und vom Motor der Maschine ausgehenden, um die horizontale Längsachse der Maschine wirksamen vertikalen Vibrationen aufgrund der Dämpfungsmittel zu der scharnierartigen Gelenkverbindung. Ferner sind die Dämpfungsmittel von jeder zur Führung der Maschine erforderlichen Krafteinwirkung durch die Bedienungsperson entlastet und werden dadurch geschont.

In diesem Zusammenhang sei erwähnt, daß der Motor, der sowohl die Maschine selbst als auch das Werkzeug antreibt, im allgemeinen selbst gedämpft auf dem Maschinenrahmen abgestützt ist und daß für die Dämpfung der horizontal wirkenden Komponenten der Werkzeugschwingungen unterschiedliche Lösungen bekannt sind. Diese Lösungen wirken in anderen Bereichen als an der Stelle der Verbindung der Holmanordnung mit der übrigen Maschine. Soweit also Horizontalschwingungen betroffen sind, werden diese durch derartige Lösungen gedämpft.

Die Erfindung ist nachstehend anhand eines in den anliegenden Zeichnungen dargestellten Ausführungsbeispieles näher erläutert. Es zeigen:

Figur 1 eine Vorderansicht auf das Ausführungsbeispiel,

Figur 2 eine Seitenansicht auf das Ausführungsbeispiel,

Figur 3 die Einzelheit X in Fig. 1 in vergrößertem Maßstab,

Figur 4 eine Schnittdarstellung gemäß der Linie IV - IV in Fig. 3 in einem noch größeren Maßstab.

Der grundsätzliche Aufbau der Maschine ist allgemein bekannt und umfaßt einen Maschinenrahmen 1, der wiederum eine Motoreinheit 2, die u.a. als Fahrantrieb der Maschine dient, eine zweiarmige Holmanordnung 3 mit den üblichen Bedienungselementen zur Handhabung der gesamten Maschine und einen vorn an dem Rahmen vorgesehenen Hauptträger 4 mit einer Abdeckhaube 4a und mit einem Radsatz 5 trägt. Der Hauptträger 4 weist an seinem Vorderende ein Arbeitsgerät 6 zur Bearbeitung des Erdbodens oder von dessen Oberfläche auf, das vorzugsweise abnehmbar ausgebildet ist und infolgedessen durch ein anderes Arbeitsgerät ersetzt werden kann. Der Motor 2 treibt üblicherweise über ein Getriebe auch gleichzeitig das Arbeitsgerät 6 an, das wenigstens ein Werkzeug aufweist und ferner von der Art ist, daß beim Betrieb des Werkzeuges unter anderem vertikale und/oder rollende Schwingungen auftreten, die neben den Motorvibrationen zu zusätzlichen Vibrationen der gesamten Maschine führen, deren Schwingungsebene senkrecht zur Längsachse der Maschine bzw. des Hauptträgers 4 liegt.

Ein derartiges Arbeitsgerät kann eine Mähbalkenvorrichtung sein, deren Aufbau ebenfalls allgemein bekannt und deshalb im einzelnen nicht näher erläutert ist. Eine solche Vorrichtung hat z.B. ein rotierendes Antriebsteil für das Obermesser des Mähbalkens 7, wobei das Antriebsteil für oszillierende Vertikalschwingungen verantwortlich ist. Es können jedoch auch andere Werkzeuge in Betracht kommen, wobei in dem hier fraglichen Zusammenhang wichtig ist, daß bei deren Betrieb unerwünschte vertikale oder vergleichbare Schwingungen auftreten, die zu dämpfen sind.

Die von Hand geführte, jedoch von dem Motor 2 vorwärts angetriebene Maschine besitzt eine bekannte Zapfwelle, die mit der Antriebswelle des Arbeitsgerätes verbunden ist. Die beiden Wellen verlaufen innerhalb des üblicherweise als Rohrträger ausgebildeten Hauptträgers 4.

Zum leichteren Verständnis des vorgeschlagenen Lösungsprinzips sei die gemeinsame Drehachse der beiden vorgenannten Wellen als Längsachse der Maschine gedacht. Vertikal und als Drehmoment zu dieser Achse wirkend seien oszillierende Schwingungskomponenten angenommen, die vom arbeitenden Werkzeug 6 und von dem Antriebsmotor 2 ausgelöst werden.

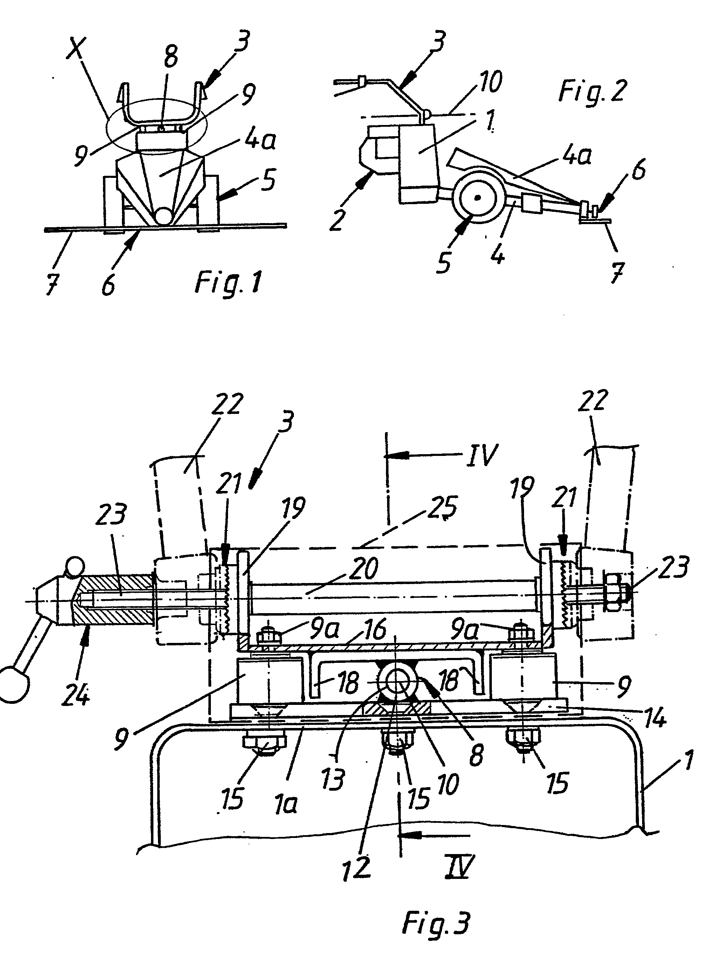

Um die entsprechenden oszillierenden Schwingungen bzw. Vibrationen der Holmanordnung zu dämpfen, dabei aber die gesamte Führungsfähigkeit der Maschine sowohl in Fahrrichtung als auch hinsichtlich ihrer Neigungs- und Querbewegungen zu erhalten, ist die Holmanordnung 3 schwingungs mäßig in gewissem Umfang von der übrigen Maschine abgekoppelt, indem die Holmanordnung über eine scharnierartige Gelenkverbindung 8 mit dem Maschinenrahmen 1 verbunden und indem horizontal seitlich neben der Gelenkverbindung wenigstens ein Dämpfungselement 9 vorgesehen ist. Die Gelenkverbindung 8 ist mittig so zwischen der Holmanordnung 3 und dem Maschinenrahmen 1 angeordnet, daß sich ihre Gelenkachse 10, um die die Holmanordnung und der Maschinenrahmen zueinander beweglich sind, wenigstens im wesentlichen in Längsrichtung der Maschine erstreckt. Wie es am besten aus Fig. 3 zu erkennen ist, sind zwei Dämpfungselemente 9 mit Abstand seitlich neben der Gelenkverbindung 8 vorgesehen, und zwar je ein Element auf jeder Seite. Es können auch zwei oder mehr Elemente auf jeder Seite verwendet werden.

Die Dämpfungselemente 9 bestehen z.B. aus bekannten Gummipuffern, die z.B. mit der Holmanordnung 3 durch Verschraubungen 9a verbunden sind, während sich die Elemente 9 andererseits lose auf dem oberen Abschnitt des Maschinenrahmens 1 abstützen. Alternativ ist es natürlich möglich, daß die Elemente 9 auch an dem Maschinenrahmen befestigt sein können, während sie lose an der Holmanordnung enliegen.

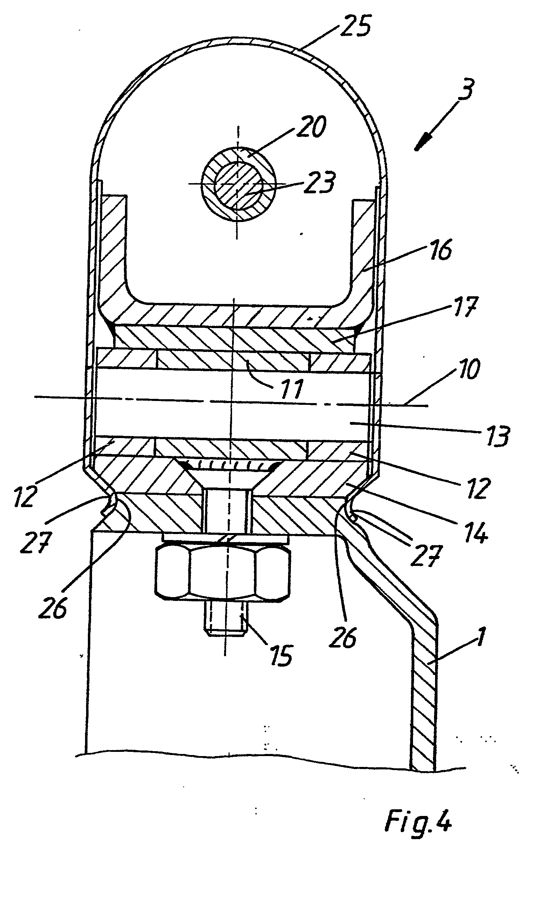

Gemäß den Figuren 3 und 4 besteht die scharnierartige Gelenkverbindung 8 aus einer mittleren Hülse 11, die mit der Holmanordnung 3 verschweißt ist, aus zwei äußeren Hülsen 12, die mit dem Maschinenrahmen 1 verschweißt sind, und aus einem gemeinsamen, alle Hülsen aufnehmenden Gelenkbolzen 13.

Der obere und horizontal ausgeführte Abschnitt la des Maschinenrahmens 1 besitzt eine durch Verschraubungen 15 angebrachte, längliche Platte 14, an der wiederum die mittlere Hülse 11 angeschweißt ist.

Die Holmanordnung 3 besitzt ein unteres, im Querschnitt zum Beispiel U-förmiges Traversenteil 16, an dessen Unterseite ein Zwischenteil 17 angeschweißt ist, an dem wiederum die äußeren Hülsen 12 angeschweißt sind. Das Zwischenteil 16 weist zusätzlich Anschlagschenkel 18 auf.

Das Traversenteil 16 trägt an seinen beiden Enden je eine Endplatte 19, die wiederum durch ein Distanzrohr 20 miteinander verbunden sind. An ihren Außenseiten weisen die Endplatten 19 je ein Teilepaar 21 auf, wobei die beiden Teile jedes Paares mittels einer Stirnverzahnung, z.B. eine Hirth-Verzahnung, miteinander in Eingriff stehen. Jeweils ein verzahntes Teil der Teilepaare steht mit einem Führungsholm 22 der Holmanordnung 3 in Eingriff. Die Hirth-Verzahnung ermöglicht eine gewünschte Einstellung der Führungsholme 22, die dadurch festgestellt werden, daß eine Gewindestange 23 durch das Distanzrohr 20 geführt ist, die mit einer hebelartigen Handhabe 24 zusammenwirkt, die durch Drehen betätigt wird, um die Führungsholme 22 festzustellen. Alternativ können die Holme 22 auch an den Endplatten 19 angeschweißt sein.

Zum Schutz der Gelenkverbindung 8, der Dämpfungselemente 9 und wenigstens des Traversenteiles 16 ist eine gemeinsame Haube 25 vorgesehen, die vorzugsweise mittels Formschluß mit dem Maschinenrahmen 1 verbunden ist. Hierzu weist der Maschinenrahmen 1 Vertiefungen 26 auf, in welche entsprechend gebogene Ränder 27 der Haube 25 einschnappen. Gemäß Fig. 4 kann die Haube 25 auch dazu dienen, daß der Gelenkbolzen 13 der Gelenkverbindung 8 in seiner Lage gesichert ist.

**Patentansprüche**

1. Handgeführte selbstfahrende Maschine für die Bearbeitung des Bodens oder seiner Oberfläche, bei der eine von einer Bedienungsperson zu handhabende Holmanordnung (3) zur Führung der Maschine über eine mit wenigstens einem Dämpfungsmittel (9) zusammenwirkende Verbindung (8) an einem Maschinenrahmen (1) befestigt ist, der einen Antriebsmotor (2) und wenigstens ein von dem Motor angetriebenes, dem Bodenbereich bearbeitendes Werkzeug (6) trägt, wobei die Verbindung eine gedämpfte und begrenzte Drehbewegung der Holmanordnung um die Längsachse der Maschine gestattet, dadurch gekennzeichnet, daß die Verbindung aus einer scharnierartigen Gelenkverbindung (11,12,13) besteht und daß das Dämpfungsmittel (9) mit horizontalem radialem Abstand von der scharnierartigen Gelenkverbindung zwischen der Holmanordnung (3) und dem Maschinenrahmen (1) wirkend vorgesehen ist.

2. Maschine nach Anspruch 1, dadurch gekennzeichnet, daß die scharnierartige Gelenkverbindung aus einer mittleren Hülse (11), die mit dem Traversenteil (16) der Holmanordnung (3) verschweißt ist, aus zwei äußeren, sich beidendig an die Hülse (11) axial anschließenden Hülsen (12), die mit dem Maschinenrahmen (1) verschweißt sind, und aus einem gemeinsamen, sich durch alle Hülsen erstreckenden Gelenkbolzen (13) besteht.

3. Maschine nach Anspruch 1, dadurch gekennzeichnet, daß jedes Dämpfungselement (9) aus einem Gummipuffer besteht, das bzw. der vorzugsweise mit dem Traversenteil (16) der Holmanordnung (3) verschraubt ist und sich auf dem oberen Abschnitt (1a) des Maschinenrahmens (1) lose abstützt.

4. Maschine nach Anspruch 2, dadurch gekennzeichnet, daß das Traversenteil (16), die Gelenkverbindung (11,12,13) und jedes Dämfpungselement (9) durch eine gemeinsame Haube (25) abgedeckt ist, die auch als Lagesicherung für den Gelenkbolzen (13) dient und vorzugsweise mittels Schnappverbindung (26,27) an dem Maschinenrahmen (1) befestigt ist.

## Claims

1. A hand-steered self-propelled machine for working the soil or its surface, in which a handle arrangement (3) to be manipulated by an operative for steering the machine is secured to a machine frame (1) via a joint (8) cooperating with at least one damping device (9), which frame carries a driving motor (2) and at least one tool (6) driven by the motor and working on the ground, the joint allowing a damped and limited rotational displacement of the handle arrangement around the longitudinal axis of the machine, characterised in that the joint comprises a hinge-type coupling joint (11, 12, 13) and that the damping means (9) is provided with horizontal radial spacing from the hinge-type coupling joint to operate between the handle arrangement (3) and the machine frame (1).

2. A machine according to claim 1, characterised in that the hinge-type coupling joint comprises a central sleeve (11) which is welded to the transverse member (16) of the handle arrangement (3), two outer sleeves (12), axially adjacent to both ends of the sleeve (11), which are welded to the machine frame (1), and a common hinge pin (13) passing through all the sleeves.

3. A machine according to claim 1, characterised in that each damping element (9) is formed by a rubber cushion which is preferably screwed onto the transverse member (16) of the handle arrangement (3) and is loosely supported on the upper section (1a) of the machine frame (1).

4. A machine according to claim 2, characterised in that the transverse member (16), the coupling joint (11, 12, 13) and each damping element (9) are covered by a common cowling (25) which also acts to secure the position of the hinge pin (13) and is preferably fastened on the machine frame (1) by means of a snap connection (26, 27).

## Revendications

1. Machine automotrice pour le travail du sol ou de sa surface, guidée manuellement, dans laquelle un agencement à guidon (3) pour le guidage de la machine et destiné à être manié par la personne utilisant la machine est fixé à un châssis (1) de la machine par l'intermédiaire d'une connexion (8) coopérant avec au moins un moyen d'amortissement (9), le châssis supportant un moteur d'entraînement (2) et au moins un outil (6) de travail du sol entraîné par le moteur, la connexion autorisant un mouvement de rotation amorti et limité de l'agencement à guidon autour de l'axe longitudinal de la machine, caractérisée en ce que la connexion est constituée par une liaison articulée du type charnière (11, 12, 13) et en ce que les moyens d'amortissement (9) sont prévus pour être actifs à une certaine distance horizontale de la liaison articulée du type charnière entre l'agencement à guidon (3) et le châssis (1) de la machine.

2. Machine selon la revendication 1, caractérisée en ce que la liaison articulée du type charnière est constituée par une douille centrale (11) soudée à la traverse (16) de l'agencement à guidon (3), par deux douilles externes (12) se raccordant axialement à chaque côté de la douille (11) et soudées au châssis (1) de la machine, et par un axe d'articulation commun (13) passant par toutes les douilles.

3. Machine selon la revendication 1, caractérisée en ce que chaque élément d'amortissement (9) est constitué par un coussin en caoutchouc vissé de préférence à la traverse (16) de l'agencement à guidon (3) et s'appuyant de façon lâche sur la section supérieure (1a) du châssis (1) de la machine.

4. Machine selon la revendication 2, caractérisée en ce que la traverse (16), la liaison articulée (11, 12, 13) et chaque élément d'amortissement (9) sont recouverts par un capot commun (25) qui sert également de dispositif de fixation pour l'axe d'articulation (13) et qui est fixé au châssis (1) de la machine de préférence par une liaison par encliquetage (26, 27).

Fig.1

Fig.2

Fig.3

EP 0 262 425 B1

Fig.4